# NEW EUROPEAN PATENT SPECIFICATION

(11) **EP 0 321 811 B2**
(45) Date of publication and mention of the opposition decision: **22.12.1999**
(45) Mention of the grant of the patent: 17.06.1992
(21) Application number: 88120669.2
(22) Date of filing: 10.12.1988
(51) Int. Cl.: A21D 8/04

(54) **Method for improving flour dough**
Methode zur Verbesserung von Mehlteig
Méthode pour l'amélioration de la pâte de farine

(30) Priority: 21.12.1987 US 136003
(43) Date of publication of application: 28.06.1989
(73) Proprietor: DSM N.V., 6411 TE Heerlen (NL)
(72) Inventor: Haarasilta, Sampsa, SF-04230 Kerava (FI); Väisänen, Seppo, SF-04260 Kerava (FI); Scott, Don, Schaumburg, Ill. (US)
(74) Representative: Matulewicz, Emil Rudolf Antonius

(56) References cited:
- US-A- 2 783 150
- US-A- 4 632 905
- US-A- 4 894 340
- BROT UND GEBÄCK, vol. 9, no. 6, June 1955, pages 101-103; P. MALTHA: "Weitere Untersuchungen über die Backverbesserung durch 1-Ascorbinsäure"
- CHEMICAL ABSTRACTS, vol. 71, no. 11, 24th November 1969, pages 225,226, no. 100605k, Columbus, Ohio, US; M.V. POLYAK et al.: "Glucose oxidase as a conditioner in bread baking", & FERMENTY MED., PISHCH. PROM. SEL. KHOZ. 1968, 155-7
- CEREAL CHEMISTRY, vol. 64, no. 3, May-June 1987, pages 172-176, St. Paul, MN, US; S.P. KAUFMAN et al.: "Evaluation of sulfhydryl oxidase as astrengthening agent for wheat flour dough"
- Young and Nimmo, Proceedings of the Biochemical Society, 1972
- Motte et al, Biochemistry, vol. 26, November 1987, pp. 7363-7371
- Don Scott, Enzymes in Food Processing, 1975, pp. 222-229
- Kaufmann and Fennema, Cereal Chemistry, 64(3), 1987, pp. 172-176
- Novo's Handbook of Practical Biotechnology, 1986, pp. 96-99
- Fluka catalogue
- Statement regarding deposit date of Aspergillus niger ATCC 1004 and Strain Descriptions
- Ullmann's Encyclopedia of Industrial Chemistry, Fifth, completely revised Edition, Vol. A4, Germany, 1985, pp. 331-347

## Description

This invention relates to a method for improving the rheological properties of a flour dough which comprises combining flour, yeast, water and an effective amount of an enzyme preparation comprising sulfhydryl oxidase and glucose oxidase and mixing said ingredients to form a suitable baking dough. The invention results in stronger doughs with improved rheological properties as well as a final baked product with improved texture.

The "strength" or "weakness" of dough is an important aspect of baking. Flours with a low protein content are customarily characterized as "weak"; the gluten (the cohesive, extensible, rubbery mass which is formed by mixing flour and water) formed with weak flour will be very extensible under stress, but will not return to its original dimensions when the stress is removed. Flours with a high protein content are customarily characterized as "strong" and the gluten formed with strong flour will be less extensible than a weak flour, and stress which is applied during mixing will be restored without breakdown to a greater extent than a weak flour. Strong dough is generally preferred in most baking contexts because of the superior rheological and handling properties of the dough and the superior form and texture qualities of the final baked product made from the dough.

For example, stronger dough is generally more stable; the stability of dough is one of the most important (if not the most important) characteristics of baking dough.

American Association of Cereal Chemists Method 36-01A defines dough stability as "(a) the range of dough time over which a positive Response is obtained; and (b) that property of a rounded dough by which it resists flattening under its own weight over a course of time". Response is defined, by the same Method, as "the reaction of dough to a known and specific stimulus, substance or set of conditions, usually determined by baking it in comparison with a control".

Stable dough is particularly useful in large scale applications where it may be difficult to control all processing parameters; strong dough will exhibit a greater tolerance of, e.g. mixing time and proofing time, and still result in quality products. Less stable dough will exhibit less tolerance in this regard.

Bakers have long used dough "conditioners" to strengthen the dough. It is suggested that such conditioners, which consist primarily of non-specific oxidants such as bromates, peroxides, iodates and ascorbic acid, help form inter-protein bonds which strengthen the dough. However, non-specific oxidants have numerous drawbacks; in particular, they can have a negative effect on the organoleptic qualities of the final product and are relatively expensive in commercial quantities and, in the case of bromates, are not permitted in certain countries.

The use of enzymes as dough conditioners has been considered as an alternative to non-specific oxidants. In particular, glucose oxidase has been used - sometimes in combinations with other conditioners - to condition or "mature" flour. U.S. Patent No. 2,783,150 (Luther) discusses the treatment of flour with glucose oxidase with allegedly can be used to form an improved dough with better handling properties and a high quality final baked product. However, the effects of glucose oxidase are somewhat contradictory. Water absorption of the dough is increased but glucose oxidase, in some contexts, may actually impair dough rheology and has never been successfully used as a dough conditioner.

It has also been suggested that the enzyme sulfhydryl oxidase could be used to strengthen dough. Sulfhydryl oxidase ("SHX") catalyzes - in the presence of oxygen - the conversion of thiol compounds to their corresponding disulfides according to the equation:

2RSH + O₂ --> RSSR +H₂O₂

The role played by sulfur containing reactive groups in wheat proteins has not been fully defined but it is suggested that the reaction of free sulfhydryl groups to form disulfide bonds has an important role in the mixing and strength of dough. In particular, if disulfide bonds are formed between two protein chains, the resulting cross-linking of chains could strengthen the dough. Hence, SHX could be expected to strengthen dough by catalyzing the reaction of free sulfhydryl groups into inter-protein disulfide bonds.

However, Kaufmann et al., Cereal Chemistry 64:3 (1987), evaluated bovine SHX's ability to strengthen wheat dough and concluded that it did not have any strengthening effect. The baking tests reported by Kaufmann et al. did not show any "noticeable" effect of SHX on loaf volume, and mixograph studies on SHX treated dough which did not show any "noticeable" effect on the time to reach a mixing peak or the extent of dough breakdown. Kaufmann et al. also evaluated the effect of SHX on flour/buffer suspensions and concluded that SHX did not show any effect on the free-SH groups of flour. Kaufmann et al. state that - for a number of possible reasons - SHX was not able to catalyze formation of disulfide bonds in the systems tested.

It has now been discovered, however, that inclusion of an enzyme preparation which comprises glucose oxidase and microbial SHX into a flour, water and yeast mix appreciably and significantly strengthens the resulting dough; the dough exhibits improved rheological qualities, and in particular, demonstrates increased stability. The final, baked product made from such dough also exhibits improved form and texture qualities.

The present invention contemplates a method for improving rheological properties of flour dough by combining therewith an effective amount of sulfhydryl oxidase and glucose oxidase. In a preferred embodiment, a flour dough is formed by mixing flour, preferably wheat flour, together with water, yeast and an enzyme preparation comprising glucose oxidase and SHX to form a dough. The resulting dough exhibits improved strength and rheological properties. The enzyme preparation may, in addition, contain catalase. The enzyme preparation is elaborated from microbial sources, including Aspergillus niger.

Preferably the enzyme preparation contains about 35 and about 800 Units (as hereinafter defined) of SHX per kilogram of flour, with a concentration of about 80 Units of SHX being particularly preferred. The present invention also contemplates a dough conditioner wherein the ratio of SHX/glucose oxidase (based on units of enzyme present) is in the range of 0.003 to 10. A ratio of about .35 is particularly preferred.

The method of the present invention can also be used in combination with a non-specific oxidant such as ascorbic acid.

In order to demonstrate the effectiveness of a glucose oxidase-sulfhydryl oxidase enzyme preparation as a dough conditioner, varying levels of glucose oxidase and sulfhydryl oxidase were added to flour, water, yeast and salt, and mixed to make a suitable baking dough. The examples set forth in Tables I, II and III were made with a wheat flour (consisting of 95 % Finnish wheat and 5 % wheat from sources outside Finland). The flour used to make the doughs set forth in Table III were treated with ascorbic acid, a non-specific oxidant. For all samples set forth in Tables I and II, 1200 g of wheat was combined with Bakers yeast, 38 g, salt, 20 g, and water, 28 g and varying amounts of an enzyme preparation purified from Aspergillus niger cells by cell-filtration and having the following activity levels:

| | |
|---|---|
| SHX | 7.7 U/mg |
| glucose oxidase | 21.9 U/mg |
| catalase | 0.17 U/mg |

The term "Units" as used herein and in the appended claims means as follows:

SHX Unit: one sulfhydryl oxidase Unit is the amount of enzyme required to deplete 1 micromole of O₂ per minute from an assay mixture containing 8 millimoles GSH and 40 millimoles sodium acetate at pH 5.5 and a temperature of 25°C. (Young J. and Nimmo I., Biochem. J. (1972), 130:33.)

Glucose Oxidase Unit: 3 Units of glucose oxidase produce 1 ml of 0.05-N gluconic acid. (Scott D., J.Agr.Food Chem. (1953), 1:727.)

Catalase Unit: one catalase Unit decomposes 265 mg of hydrogen peroxide under the assay conditions of 25°C., 1.5 % hydrogen peroxide and a pH of 7.0 when reacted to exhaustion. (Scott D. and Hammer F., Enzymologia (1960), 22:194.)

The flour, water, yeast, salt and enzyme preparation were mixed in a high speed dough mixer for 71 seconds (Stephan) to develop a suitable baking dough. A control dough - without the addition of any enzyme preparation - was also prepared. The effect of the enzyme preparation on the dough was measured by following standard methods according to the International Association of Cereal Chemistry (ICC) and the American Association of Cereal Chemistry (AACC): amylograph (ICC 126), farinograph (AACC 54-21) and extensigraph. (AACC 54-10).

The amylograph, farinograph and extensigraph are indirect methods - used by bakers worldwide - to measure the rheological properties of dough. The amylograph determines the viscosity changes of flour-water suspensions during increasing temperatures (which are increased at a rate of 1.5°C./min.). At approximately 65°C. the mixture begins to gelatinize and typically reaches its maximum viscosity at about 80°C. depending on the characteristics of the flour. The resulting amylograph curve illustrates the viscosity changes of flour; generally, flour with good baking properties exhibits higher viscosity at higher temperature for its maximum gelatinizing point.

AACC Method 22-10 defines the amylograph as follows: "the amylograph is a recording viscometer that may be used primarily to determine effect of alpha-amylase on viscosity of flour as a function of temperature. The high viscosity of the starch gel is counteracted by the action of alpha-amylase, which liquefies starch granules during heating of slurry. The amylograph value, or malt index, provides information on probable effect of malt alpha-amylase during baking process".

The extensigraph measures such properties as the dough's ability to retain gas evolved by yeast and the ability to withstand proofing. In effect, the extensograph measures the relative strength of a particular dough. A strong dough will exhibit a higher and longer extensograph curve than a weak dough.

AACC Method 54-10 defines the extensigraph as follows: "the extensigraph records a load-extension curve for test piece of dough stretched until it breaks. Characteristics of load-extension curves or extensigrams are used to assess general quality of flour and its responses to improving agents".

The farinograph method determines the water intake of a particular flour and the mixing tolerance of the resulting dough. Better baking flours, and dough, will exhibit higher farinograph values. If a particular flour shows relatively high water intake, and the mixing tolerance of the resulting dough is good, the farinograph curve shows retention of most if not all of the initial height over time. The machinability and baking quality of such a dough is likely to be excellent.

AACC Method 54-21 defines the farinograph as follows: "the farinograph measures and records resistance of a dough to mixing. It is used to evaluate absorption of flours and to determining stability and other characteristics of doughs during mixing".

Baking conditions used for baking bread from the dough prepared as above were as follows: oven: normal hearth oven (Dahlen) w/10 seconds steaming
flour time: 30 minutes
final proofing: 30 minutes/37°C./75 % humidity
baking time: 25 minutes at 220°C.
cooling time: 1 hour/20°C.

**TABLE I**

| Comparison of Rheological Properties of Doughs | | | | | |
|---|---|---|---|---|---|
| ENZYME ADDITION | Dough Sample | | | | |
| | 1 | 2 | 3 | 4 | 5 |
| SHX Units/kg flour | - | 38 | 77 | 154 | 770 |
| GO Units/kg flour | - | 110 | 219 | 438 | 2190 |
| CAT Units/kg flour | - | 2 | 4 | 7 | 40 |
| SHX/GO Unit ratio | - | 0.34 | 0.35 | 0.35 | 0.35 |
| GO/CAT Unit ratio | - | 55 | 55 | 55 | 55 |

| RESULTS | | | | | |
|---|---|---|---|---|---|
| Farinogram Water absorption % | 62 | 62 | 62 | 62 | 62 |
| Development of the dough/(measured in minutes) | 2 | 3 | 3.5 | 2 | 2 |
| Stability/(measured in minutes) | 3 | 12 | 23 | 19 | 2 |
| Softening/(after?) 12 min Brabender Units (B.u.) | 50 | 30 | 10 | 10 | 120 |
| Resistance to Extens. Brabender Units (B.u.) | 420 | 450 | 580 | 610 | 980 |
| Extension,mm Brabender Units (B.u.) | 180 | 165 | 143 | 139 | 86 |
| Ratio resistance/extens B.u./mm | 2.4 | 2.7 | 4.1 | 4.4 | 11 |
| Maximum extension (B.u.) | 620 | 640 | 760 | 720 | 980 |

Table I, above sets forth rheological properties for four doughs, a control dough (dough #1) and doughs conditioned with the enzyme preparations having different levels of SHX, glucose oxidase and catalase (doughs #2, #3, #4 and #5). The data demonstrates that dough mixed with an enzyme preparation containing glucose oxidase and SHX exhibit significantly improved rheological properties when compared with the control dough. In particular, dough#3 (23 minutes) and dough#4 (19 minutes) exhibit dramatic increases in stability compared to the control dough (3 minutes). The improved stability of the doughs treated with the enzyme preparation indicates that such doughs will exhibit better handling and machinability properties. The analysis data for the doughs treated with the enzyme preparation also suggests that these doughs were significantly strengthened. The resistance to extension, the maximum extension and the ratio of resistance to extension/extension all indicate that the treated doughs were significantly strengthened.

As noted, doughs with improved stability and strength generally also result in final baked products with improved qualities. Baking tests confirmed that doughs treated with the method of the present invention provided superior final products.

**TABLE II**

| Results of Baking Tests | | | |
|---|---|---|---|
| | Loaf Sample | | |
| | 1 | 2 | 3 |
| Dough sample (Table I) | 1 (control) | 3 | 4 |

| Dough consistency | | | |
|---|---|---|---|
| After mixing (B.u.) | 325 | 315 | 320 |
| After floor time (B.u.) | 285 | 290 | 300 |
| Loaf weight (g) | 370 | 370 | 370 |
| Loaf height (mm) | 76 | 79 | 76 |
| Loaf width (mm) | 172 | 171 | 173 |
| Loaf H/W ratio | 0.44 | 0.46 | 0.44 |
| Loaf volume (ml) | 1230 | 1340 | 1290 |
| Loaf Spec.Vol. (ml/kg) | 3310 | 3620 | 3490 |
| Loaf moisture (%) | 45.2 | 45.0 | 45.0 |

Table II sets forth baking results for loafs baked from doughs # 1 (control), # 3 and # 4 referred to in Table I. The control dough (loaf # 1) was not treated with any enzyme preparations and dough samples # 3 and # 4 (loaf samples # 2 and # 3 respectively) were treated with the enzyme preparation as set forth in Table I. The data from the baking tests set forth in Table II demonstrates that - compared to the control dough - doughs treated with the SHX/glucose oxidase enzyme preparation exhibited improved size and texture. In particular, loaf sample # 2 (baked with dough sample # 3) exhibited higher loaf volume (1340 ml. versus 1230 ml), higher specific volume (3620 ml/kg versus 3310 ml/kg) than the control sample. These height and width values demonstrate that loaf samples # 2 and # 3 were rounder and more symmetrical in shape, evidence of greater dough strength. In addition, the porosity of these loafs were more uniform meaning that the pores are the same size both near the crust and the center of the loafs.

Organoleptic comparison of the three loaf samples indicated that loaf samples # 2 and # 3 demonstrated improved texture properties compared to the control.

The baking results suggest that the present invention will help bakers achieve a larger loaf volume. In the commercial context this means that bakers could use wheat with a lower protein content, which is cheaper, to achieve the desired loaf size and/or can utilize a smaller dough plug to achieve the desired loaf size; both possibilites could potentially result in substantial savings in material costs to the baker.

In order to determine the effect of varying levels of SHX and glucose oxidase in enzyme preparations used to treat baking doughs, the following enzyme samples were developed:
Enzyme Sample A (prepared from A. niger cells) Activities:
   - GO: 1.0 U/mg
   - SHX: 11.5 U/mg
   - CAT: --
Enzyme Sample B (prepared from A. niger cells) Activities:
   - GO: 129 U/mg
   - SHX: 0.4 U/mg
   - CAT: 0.2 U/mg
Enzyme Sample C (prepared from A. niger cells) Activities:
   - GO: 122 U/mg
   - SHX: 0.8 U/mg
   - CAT: 2.0 U/mg

Tables III and IV below set forth data regarding the rheological properties of doughs prepared with Enzyme Samples A, B and C as well as a control dough.

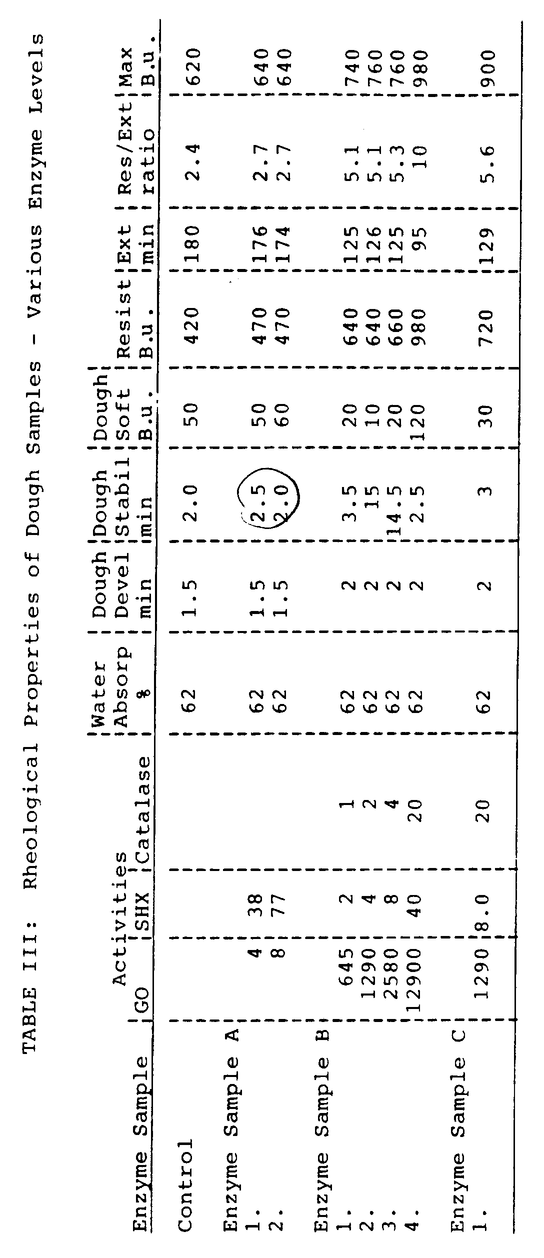

The doughs set forth in Table III were prepared with "weak" Finnish wheat flour that had been treated with ascorbic acid (a non-specific oxidant) and preparation as described above. Although this data suggests, as indicated by the prior art, that glucose oxidase alone can have a conditioning effect, relatively large (and uneconomical) quantities of glucose oxidase are required to achieve appreciable strengthening. The data also suggests that a glucose oxidase/SHX combination is the most efficient and economical preparation for dough conditioning.

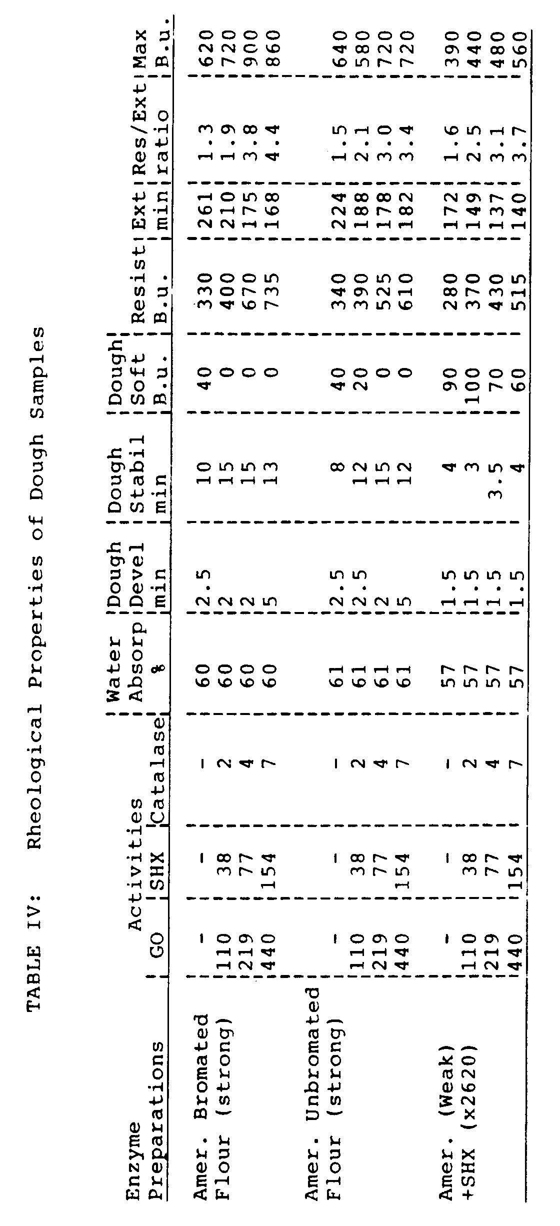

Table IV sets forth data for doughs prepared using different US flours, both strong and weak. Compared to the control samples, doughs prepared with these flours that were treated with an SHX/glucose oxidase enzyme preparation generally demonstrated increased stability and strength, as indicated by the resistance and extension data. The effect was greater in the case of the "strong" flours (bromated and unbromated) than for the unbromated "weak" flours.

Table V set below sets forth data regarding rheological properties of doughs prepared with Finnish rye meal. A control dough with no enzyme treatment (sample # 1) and dough samples with varying levels of SHX and glucose oxidase were prepared.

**TABLE V**

| Rheological Properties of Rye Dough* Samples | | | | | | | | |
|---|---|---|---|---|---|---|---|---|
| Enzyme Preparations | Activities | | | Water Absorp % | Dough Devel min | Dough Stabil min | Dough Soft B.u. | |
| | GO | SHX | Catalase | | | | | |
| O - Control | | | | 75 | 3.5 | 3 | 20 | Au/°C |
| 1. | 110 | 38 | 2 | 73 | 3 | >12 | 0 | |
| 2. | 219 | 77 | 4 | 73 | 3 | >12 | 0 | |
| 3. | 440 | 154 | 7 | 74 | 3 | >12 | +10 | |
| 4. | 645 | 2 | 1 | 74 | 3.5 | >12 | 0 | |
| 5. | 1290 | 4 | 2 | 74 | 3.5 | >12 | +10 | |
| 6. | 2580 | 8 | 4 | 75 | 3.5 | >12 | +10 | |
| 7. | 12900 | 40 | 20 | 74 | 3.5 | 6 | 20 | |

| | | | | | | | | |
|---|---|---|---|---|---|---|---|---|
| *Analysis of the rye meal samples: Ash content 1.74 % Falling number 125 Amylogram 260 B.U. at 66°C | | | | | | | | |

The data in Table V shows that an enzyme preparation with SHX/GO acts as a dough conditioner; the most efficient - and cost effective - preparations (samples 1-3) will probably be more effective in large scale contexts.

The results of these experiments demonstrate that use of an enzyme preparation containing SHX and glucose oxidase appreciably and significantly improves the rheological properties of dough. The effect of enzyme preparation is more pronounced with certain flours and may be enhanced by the presence of a dough conditioner such as ascorbic acid. It is believed that oxidative enzymes and non-specific oxidants act synergistically.

The foregoing general discussion and experimental examples are intended to be illustrative of the present invention, and are not to be considered as limiting. Other variations within the spirit and scope of this invention are possible and will present themselves to those skilled in the art.

## Claims

1. A method for improving rheological properties of a flour dough characterised in that flour, yeast and water are combined with an effective amount of a microbial enzyme preparation comprising sulphydryl oxidase and glucose oxidase and said ingredients are mixed to form a suitable baking dough, the ratio of sulphydryl oxidase to glucose oxidase in said preparation, based on units of enzymes present, being in the range of 0.003 to 10 and sulphydryl oxidase being present in said dough in an amount of 35-800 units per kg of flour.

2. A method in accordance with claim 1 characterised in that the enzyme preparation is derived from Aspergillus niger cells.

3. A method in accordance with claim 1 characterised in that the enzyme preparation is added in an amount of about 80 units of sulphydryl oxidase per kilogram of flour.

4. A method in accordance with claim 1 characterised in that the flour is wheat flour.

5. A method in accordance with claim 1 characterised in that the sulphydryl oxidase and glucose oxidase are present in said preparation in a ratio of about 0.35, based on units of sulphydryl oxidase and glucose oxidase present.

6. A method in accordance with claim 1 characterised in that the flour is fortified by non-specific dough conditioners.

7. A method in accordance with claim 6 characterised in that the flour is fortified with ascorbic acid as a dough conditioner.

## Patentansprüche

1. Methode zur Verbesserung der rheologischen Eigenschaften eines Mehlteiges, dadurch gekennzeichnet, dass Mehl, Hefe und Wasser mit einer wirksamen Menge eines microbiellen Enzympräparates zusammengegeben werden, welches Sulfhydryl-Oxidase und Glucose-Oxidase enthält, und dass diese Zutaten gemischt werden, um einen geeigneten Backteig zu bilden, wobei das Verhältnis von Sulfhydryl-Oxidase zu Glucose-Oxidase im Präparat, basierend auf den anwesenden Enzym-Einheiten, im Bereich von 0.003 bis 10 liegt, und die Sulfhydryl-Oxidase im Teig in einer Menge von 35-800 Einheiten pro kg Mehl vorhanden ist.

2. Methode gemäss Anspruch 1, dadurch gekennzeichnet, dass das Enzympräparat aus Aspergillus niger Zellen gewonnen wird.

3. Methode gemäss Anspruch 1, dadurch gekennzeichnet, dass das Enzympräparat in einer Menge von etwa 80 Einheiten an Sulfhydryl-Oxidase pro Kilogramm Mehl zugegeben wird.

4. Methode gemäss Anspruch 1, dadurch gekennzeichnet, dass das Mehl Weizenmehl ist.

5. Methode gemäss Anspruch 1, dadurch gekennzeichnet, dass die Sulfhydryl-Oxidase und Glucose-Oxidase im genannten Präparat in einem Verhältnis von etwa 0.35, basierend auf den Einheiten an Sulfhydryl-Oxidase und Glucose-Oxidase, vorhanden sind.

6. Methode gemäss Anspruch 1, dadurch gekennzeichnet, dass das Mehl durch nicht-spezifische TeigKonditioniermittel gestärkt ist.

7. Methode gemäss Anspruch 6, dadurch gekennzeichnet, dass das Mehl mit Ascorbinsäure als Konditioniermittel gestärkt ist.

## Revendications

1. Procédé pour améliorer les proprietes rheologiques d'une pâte de farine, caractérisé en ce que de la farine, de la levure et de l'eau sont combinées avec une quantité efficace d'une préparation d'enzyme microbienne comprenant de la sulfhydrile oxydase et de la glucose oxydase, et en ce que lesdits ingrédients sont mélangés pour former une pâte à cuire convenable, le rapport entre la sulfhydrile oxydase et la glucose oxydase, sur la base des unités d'enzyme présentes, étant compris dans la gamme allant de 0,003 a 10, et la sulfhydrile oxydase étant présente dans ladite pâte dans une quantité allant de 35 à 800 unités par kg de farine.

2. Procédé selon la revendication 1, caractérisé en ce que la préparation d'enzyme est derivée de cellules d'Aspergillus niger.

3. Procédé selon la revendication 1, caractérisé en ce que la préparation d'enzyme est ajoutée dans une quantité d'environ 80 unités de sulfhydrile oxydase par kilogramme de farine.

4. Procéde selon la revendication 1, caracterise en ce que la farine est de la farine de froment.

5. Procédé selon la revendication 1, caractérisé en ce que la sulfhydrile oxydase et la glucose oxydase sont présentes dans ladite préparation dans un rapport d'environ 0,35 sur la base des unités de sulfhydrile oxydase et de glucose oxydase présentes.

6. Procédé selon la revendication 1, caractérisé en ce que la farine est fortifiée par des conditionneurs de pâte non spécifiques.

7. Procédé selon la revendication 6, caractérisé en ce que la farine est fortifiée avec de l'acide ascorbique en tant que conditionneur de pâte.
